# EUROPÄISCHE PATENTSCHRIFT

(11) **EP 1 671 100 B1**
(45) Veröffentlichungstag und Bekanntmachung des Hinweises auf die Patenterteilung: **12.03.2008**
(21) Anmeldenummer: 04790154.1
(22) Anmeldetag: 06.10.2004
(51) Int. Cl.: G01N 1/42, B01L 7/00, G05D 23/20

(54) **KÜHLEINRICHTUNG ZUR KRYOKONSERVIERUNG UND ENTSPRECHENDES BET RIEBSVERFAHREN**
COOLING APPARATUS USED FOR CRYONIC PRESERVATION, AND CORRESPONDING OPERATING METHOD
DISPOSITIF DE RERIGERATION, NOTAMMENT DE CRYOCONSERVATION, ET MODE DE FONCTIONNEMENT CORRESPONDANT

(30) Priorität: 08.10.2003 DE 10346793
(43) Veröffentlichungstag der Anmeldung: 21.06.2006
(73) Patentinhaber: Fraunhofer-Gesellschaft zur Förderung der angewandten Forschung e.V., 80686 München (DE)
(72) Erfinder: SCHÖN, Uwe, 66540 Neunkirchen (DE); ZIMMERMANN, Heiko; c/o IBMT Fraunhofer -, 66386 St. Ingbert (DE); FUHR, Günter, 13187 Berlin (DE)
(74) Vertreter: Beier, Ralph
(86) Internationale Anmeldenummer: PCT/EP2004/011172
(87) Internationale Veröffentlichungsnummer: WO 2005/036136

(56) Entgegenhaltungen:
- DE-U- 8 807 267
- US-A- 4 566 283
- US-A- 5 003 787
- US-A- 5 048 300
- US-A1- 2003 029 179

## Beschreibung

Die Erfindung betrifft eine Kühleinrichtung, insbesondere zur Kryokonservierung biologischer Proben, gemäß dem Oberbegriff des Anspruchs 1 sowie ein entsprechendes Betriebsverfahren gemäß dem Oberbegriff des Anspruchs 20.

Es ist im Rahmen der sogenannten Kryokonservierung bekannt, biologische Proben, wie beispielsweise Stammzellen, einzufrieren, um diese vitalitätserhaltend zu konservieren. Zur vollständigen Vitalitätserhaltung ist hierbei eine Abkühlung bis auf weniger als -130° Celsius erforderlich, so dass als Kühlmittel üblicherweise verflüssigter Stickstoff eingesetzt wird. Für die Vitalitätserhaltung bei der Kryokonservierung ist jedoch nicht nur die geringe Lagerungstemperatur wichtig, sondern auch die Einhaltung eines vorgegebenen zeitlichen Temperaturverlaufs beim Einfrieren und Auftauen.

Zur Erfüllung dieser Anforderungen sind beispielsweise aus DE 88 07 267.3 Kühleinrichtungen erhältlich, die als Kühlmittel verflüssigten Stickstoff verwenden, der einen Siedepunkt von -196°C aufweist. Der flüssige Stickstoff befindet sich hierbei zunächst in einem Kühlmittelvorratsbehälter und wird darin von einem elektrisch betriebenen Verdampfer erwärmt, wobei der ausgasende Stickstoff über eine Kühlmittelzuleitung in eine Kühlkammer geführt wird und deren Innenraum entsprechend kühlt, so dass in der Kühlkammer befindliches Kühlgut eingefroren wird.

Das einfache Ausgasen von Stickstoff durch den Verdampfer ermöglicht jedoch nur Kühlmitteltemperaturen nahe dem Siedepunkt von -196°C, wohingegen die Kühlkammer insbesondere während des Einfrierens und Auftauens auch auf höhere Temperaturen gekühlt werden soll. In der Kühlmittelzuleitung zwischen dem Kühlmittelvorratsbehälter und der Kühlkammer ist deshalb eine elektrisch betriebene Heizung angeordnet, die den ausgasenden Stickstoff auf die gewünschte Temperatur aufheizt.

Die bekannten Kühleinrichtungen weisen darüber hinaus eine Regeleinrichtung auf, die als Regelgröße die Temperatur des in die Kühlkammer eingeleiteten Kühlmittels misst und als Stellgröße die Heizleistung der in der Kühlmittelzuleitung angeordneten Heizung einstellt, um beim Einfrieren und Auftauen den gewünschten zeitlichen Temperaturverlauf zu erreichen. Die Regeleinrichtung steuert hierbei also nur eine einzige Heizung an und wertet nur eine einzige Temperatur aus.

Nachteilig an den vorstehend beschriebenen bekannten Kühleinrichtungen ist jedoch das unbefriedigende Regelverhalten, was sich in einem Überschwingen zwischen Soll- und Ist-Temperatur äußert und beim Einfrieren und Auftauen zu einer Abweichung von dem gewünschten zeitlichen Temperaturverlauf führt. Im Ergebnis kann das unbefriedigende Regelverhalten der bekannten Kühleinrichtungen zu einer Schädigung der zu konservierenden biologischen Proben führen.

Aus DE 88 07 267 U1 ist eine Vorrichtung bekannt, bei der zwei Temperaturen gemessen werden, nämlich die Temperatur eines in eine Kühlkammer einströmenden Kühlmittels und die Temperatur in der Kühlkammer. Weiterhin wird hierbei über einen PID-Regler eine Heizung in Abhängigkeit von den beiden gemessenen Temperaturen eingestellt. Die eine Heizung heizt hierbei das Kühlmittel vor, bevor es in die Kühlkammer gerät. Weiterhin offenbart diese Druckschrift eine Einstelleinrichtung, mit der die Heizleistung des Kühlmittelverdampfers eingestellt werden kann. Bei dieser bekannten Vorrichtung wird jedoch lediglich eine einzige Stellgröße eingestellt, nämlich die Heizleistung der Heizung, die unmittelbar vor dem Kühlmitteleingang in die Kühlkammer angeordnet ist. Die Heizleistung des Kühlmittelverdampfers wird hierbei jedoch nicht geregelt, sondern über eine einstellbare und stabilisierte Stromversorgung ungeregelt eingestellt.

Aus US 2003/029179 A1 ist eine technisch andersartige Kühleinrichtung bekannt, bei der das Kühlmittel (z.B. flüssiger Stickstoff) aus einem Kühlmittelbehälter in flüssiger Form entnommen wird und erst in einem Verdampfer verdampft. Aus diesem Grund offenbart diese Druckschrift auch keinen beheizbaren Kühlmittelverdampfer, dessen Heizleistung einstellbar ist. Vielmehr weist diese bekannte Kühleinrichtung lediglich eine einzige Heizeinrichtung auf, um die Temperatur auf den gewünschten Wert zu regeln. Aus dieser Druckschrift ist also nicht bekannt, mehrere verschiedene Heizleistungen durch einen Mehrfachregler einzustellen.

Die Kühleinrichtungen entsprechend den beiden vorstehend erwähnten Druckschriften weisen deshalb ebenfalls ein unbefriedigendes Temperaturregelverhalten auf.

Der Erfindung liegt deshalb die Aufgabe zugrunde, bei den vorstehend beschriebenen bekannten Kühleinrichtungen das Temperaturregelverhalten zu verbessern.

Diese Aufgabe wird, ausgehend von den eingangs beschriebenen bekannten Kühleinrichtungen gemäß dem Oberbegriff des Anspruchs 1, durch die kennzeichnenden Merkmale des Anspruchs 1 und - hinsichtlich eines entsprechenden Betriebsverfahrens - durch die Merkmale des Anspruchs 20 gelöst.

Die Erfindung umfasst die allgemeine technische Lehre, als Regelgrößen nicht nur die Temperatur in der Kühlkammer zu erfassen, sondern mindestens eine weitere Temperatur, nämlich die Temperatur des der Kühlkammer zugeführten aufgewärmten Kühlmittels.

Darüber hinaus umfasst die Erfindung auch die allgemeine technische Lehre, zusätzlich zu der Heizleistung der in der Kühlmittelzuleitung angeordneten Heizung mindestens eine weitere Stellgröße einzustellen, nämlich die Heizleistung des in dem Kühlmittelvorratsbehälter angeordneten Verdampfers.

Erfindungsgemäß weist die erfindungsgemäße Kühleinrichtung deshalb einen Mehrfachregler auf, der als Regelgrößen mehrere Temperaturen erfasst und als Stellgrößen mehrere Heizleistungen einstellt. Der hier verwendete Begriff eines Mehrfachreglers ist allgemein zu verstehen und nicht auf einen einzigen Regler beschränkt, der mehrere Eingänge und/oder mehrere Ausgänge aufweist. Es ist vielmehr auch möglich, dass der Mehrfachregler zwei im wesentlichen getrennte Regelkreise aufweist.

So kann beispielsweise ein Regelkreis als Regelgröße die Temperatur in der Kühlkammer erfassen und als Stellgröße die Heizleistung des Verdampfers einstellen, während ein anderer Regelkreis als Regelgröße die Temperatur des erwärmten Kühlmittels vor der Einleitung in die Kühlkammer erfasst und als Stellgröße die Heizleistung der in der Kühlmittelzuleitung angeordneten Heizung einstellt.

Falls die Ist-Temperatur in der Kühlkammer über der Soll-Temperatur liegt, wird die Heizleistung des Verdampfers erhöht, so dass mehr Stickstoff ausgast und in die Kühlkammer gelangt, was zu einer entsprechend stärkeren Kühlung führt.

Falls die Ist-Temperatur in der Kühlkammer dagegen geringer ist als die Soll-Temperatur, wird die Heizleistung des Verdampfers verringert, damit weniger Stickstoff ausgast. Dieses Herunterregeln des Verdampfers bei ausreichender Kühlung hat auch den Vorteil, dass nicht unnötig Stickstoff verbraucht wird.

Die Regelung der Heizleistung der in der Kühlmittelzuleitung angeordneten Heizung erfolgt in ähnlicher Weise, indem diese Heizleistung erhöht wird, wenn die Ist-Temperatur des erwärmten Kühlmittels unter der Soll-Temperatur in der Kühlkammer liegt. Entsprechend wird die Heizleistung der in der Kühlmittelzuleitung angeordneten Heizung verringert, wenn die Ist-Temperatur des erwärmten Kühlmittels über der Soll-Temperatur in der Kühlkammer liegt.

In einem bevorzugten Ausführungsbeispiel der Erfindung erfolgt die Messung der Temperatur in der Kühlkammer nicht durch einen einzigen Temperatursensor, sondern durch mehrere Temperatursensoren, die vorzugsweise räumlich verteilt angeordnet sind, um örtliche Temperaturschwankungen innerhalb der Kühlkammer erfassen zu können. Die Regeleinrichtung kann dann die Ausbildung lokaler Temperaturspitzen innerhalb der Kühlkammer durch eine Mittelwertbildung berücksichtigen und eine Dokumentation der tatsächlichen Temperaturverteilung liefern.

Darüber hinaus ist es vorteilhaft, wenn mindestens ein Temperatursensor ein Thermoelement aufweist, während ein anderer Temperatursensor als temperaturabhängiger elektrischer Widerstand ausgebildet ist. Eine derartige Kombination unterschiedlicher Sensortypen ist sinnvoll, da auf diese Weise die Vorteile der unterschiedlichen Sensortypen genutzt werden können, wohingegen die Nachteile vermieden werden. So weisen Thermoelemente als Temperatursensoren ein gutes dynamisches Verhalten auf, wohingegen die Genauigkeit relativ gering ist. Temperaturabhängige elektrische Widerstände weisen dagegen aufgrund ihrer thermischen Trägheit ein schlechtes dynamisches Verhalten, aber eine hohe Genauigkeit auf. Durch eine Kombination dieser beiden Sensortypen lässt sich die Temperatur also hochdynamisch und sehr genau messen.

Als temperaturabhängige elektrische Widerstände können beispielsweise sogenannte NTCs (negativ temperature coefficient) oder PTCs (positive temperature coefficient) eingesetzt werden.

Darüber hinaus weist die erfindungsgemäße Kühleinrichtung vorzugsweise eine Speichereinrichtung auf, um die Temperatur in der Kühlkammer und/oder die Temperatur des erwärmten Kühlmittels vor dem Eintritt in die Kühlkammer zu protokollieren. Beispielsweise kann hierzu ein handelsüblicher PC eingesetzt werden, der über eine Datenschnittstelle mit der Regeleinrichtung der erfindungsgemäßen Kühleinrichtung verbunden ist. Darüber hinaus kann ein derartiger PC auch die Aufgabe übernehmen, die gewünschten zeitlichen Temperaturverläufe beim Einfrieren und Auftauen vorzugeben.

Bei der Kryokonservierung biologischer Proben ist es ferner wünschenswert, räumliche Temperaturschwankungen innerhalb der Kühlkammer zu vermeiden, damit unabhängig von der Positionierung der zu konservierenden biologischen Probe innerhalb der Kühlkammer ein definiertes Einfrieren bzw. Auftauen möglich ist. In dem bevorzugten Ausführungsbeispiel der Erfindung mündet die Kühlmittelzuleitung deshalb über einen Diffusor in die Kühlkammer, wobei der Diffusor das einströmende Kühlmittel möglichst gleichmäßig innerhalb der Kühlkammer verteilt. Ein derartiger Diffusor kann beispielsweise aus einer Vorkammer bestehen, in die das Kühlmittel zunächst eingeleitet wird, wobei die Vorkammer über Auslässe großflächig mit der Kühlkammer verbunden ist, um lokale Temperaturbeeinflussungen zu vermeiden.

In einer Variante der Erfindung mündet die Kühlmittelzuleitung hierbei seitlich und vorzugsweise nur an einer Seite der Kühlkammer in die Kühlkammer. Dies ist vorteilhaft, da sich dann innerhalb der Kühlkammer Kühlmittelströmungen ausbilden, die schnell zu einer Durchmischung und einer Temperaturangleichung führen.

In einer anderen Variante der Erfindung mündet die Kühlmittelzuleitung dagegen an der Oberseite der Kühlkammer in die Kühlkammer, was insbesondere dann sinnvoll sein kann, wenn die Kühlkammer eine an der Unterseite offene Kühlglocke ist.

Der hier erwähnte Begriff einer Kühlkammer ist also nicht auf stationäre Kühlkammern beschränkt, in die das Kühlgut eingebracht wird. Es ist vielmehr auch möglich, dass die Kühlkammer eine mobile Kühlglocke ist, die auf das jeweilige Kühlgut aufgesetzt wird.

Ferner ist zu erwähnen, dass die Erfindung nicht auf Stickstoff als Kühlmittel beschränkt. Es ist im Rahmen der Erfindung vielmehr auch möglich, andere Kühlmittel zu verwenden, wie beispielsweise Luft oder Helium.

Darüber hinaus umfasst die Erfindung auch ein entsprechendes Betriebsverfahren für eine derartige Kühleinrichtung.

Andere vorteilhafte Weiterbildungen der Erfindung sind in den Unteransprüchen gekennzeichnet oder werden nachstehend zusammen mit der Beschreibung dem bevorzugten Ausführungsbeispiel der Erfindung anhand der Figuren näher erläutert. Es zeigen:
- Figur 1: eine schematische Darstellung einer erfindungsgemäßen Kühleinrichtung zur Kryokonservierung biologischer Proben,
- Figur 2: ein alternatives Ausführungsbeispiel einer erfindungsgemäßen Kühleinrichtung,
- Figur 3: ein regelungstechnisches Ersatzschaltbild der erfindungsgemäßen Kühleinrichtung sowie
- Figur 4: einen zeitlichen Temperaturverlauf in der Kühlkammer beim Einfrieren biologischer Proben.

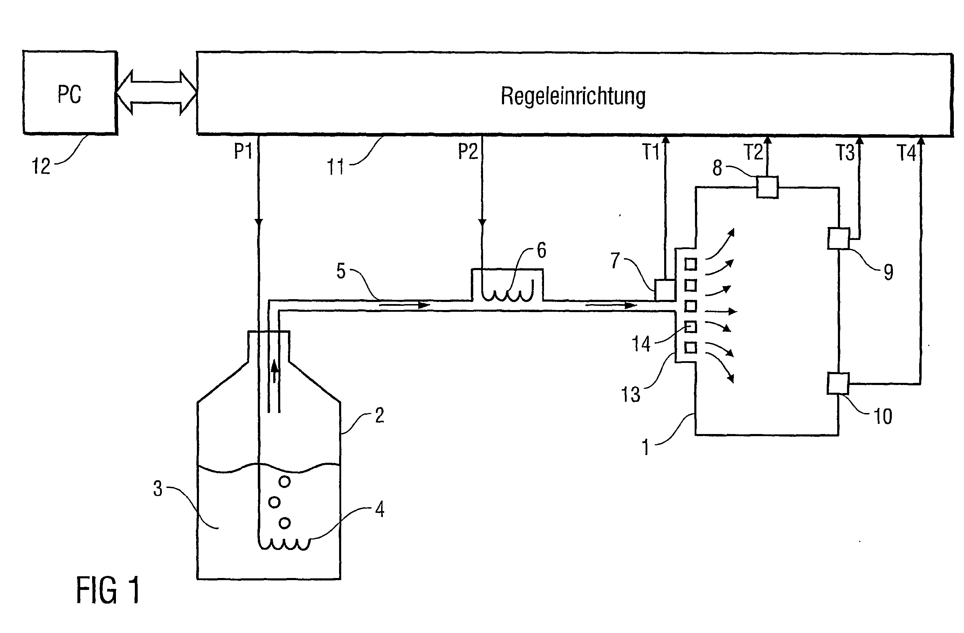

Die in Figur 1 dargestellte Kühleinrichtung dient zur vitalitätserhaltenden Kryokonservierung biologischer Proben, wobei die Proben in einer Kühlkammer 1 eingefroren und aufgetaut werden.

Weiterhin weist die Kühleinrichtung einen Kühlmittelvorratsbehälter 2 auf, in dem sich verflüssigter Stickstoff als Kühlmittel 3 befindet, wobei das Kühlmittel 3 von einem elektrisch betriebenen Verdampfer 4 verdampft werden kann.

Das in dem Kühlmittelvorratsbehälter 2 ausgasende Kühlmittel 3 mit einer Temperatur nahe dem Siedepunkt von -196°C gelangt dann über eine Kühlmittelzuleitung 5 in die Kühlkammer 1, was zu einer entsprechenden Kühlung führt.

Der Verdampfer 4 weist hierbei eine einstellbare Heizleistung P1 auf, um die Intensität der Kühlung variieren zu können. So gast bei einer großen Heizleistung P1 des Verdampfers viel Kühlmittel 3 aus, was zu einer entsprechenden starken Kühlwirkung führt. Bei einer geringen Heizleistung P1 des Verdampfers 4 gast dagegen weniger Kühlmittel 3 aus, so dass auch die Kühlwirkung geringer ausfällt.

Zur Temperierung der Kühlkammer 1 ist darüber hinaus eine Heizung 6 mit einer einstellbaren Heizleistung P2 vorgesehen, wobei die Heizung 6 in der Kühlmittelzuleitung 5 angeordnet ist und das aus dem Kühlmittelvorratsbehälter 2 ausgasende Kühlmittel 3 vor dem Eintritt in die Kühlkammer 1 erwärmt, um insbesondere während des Einfrierens und Auftauens Temperaturen oberhalb des Siedepunktes von -196°C zu erreichen.

Zur Temperaturüberwachung sind vier Temperatursensoren 7-10 vorgesehen, wobei der Temperatursensor 7 einen Temperaturwert T1 misst, der die Temperatur des von der Heizung 6 erwärmten Kühlmittels 3 vor dem Eintritt in die Kühlkammer 1 wiedergibt.

Die Temperatursensoren 8-10 messen dagegen Temperaturwerte T2, T3 bzw. T4, welche die Temperatur innerhalb der Kühlkammer 1 an verschiedenen Punkten wiedergeben.

Die Temperatursensoren 8-10 sind hierbei räumlich verteilt angeordnet, so dass lokale Temperaturspitzen innerhalb der Kühlkammer 1 durch eine Mittelwertbildung ausgeglichen werden können.

Zur Temperaturregelung ist hierbei eine Regeleinrichtung 11 vorgesehen, die als Regelgrößen die Temperaturen T1-T4 erfasst und als Stellgrößen die Heizleistung P1 des Verdampfers 4 und die Heizleistung P2 der Heizung 6 einstellt, um beim Einfrieren und Auftauen einen gewünschten zeitlichen Temperaturverlauf einzuhalten, wobei der Temperaturverlauf durch einen herkömmlichen PC 12 vorgegeben werden kann, der mit der Regeleinrichtung 11 über eine Datenschnittstelle verbunden ist. Darüber hinaus protokolliert der PC 12 auch die von den Temperatursensoren 7-10 gemessenen Temperaturwerte T1-T4 und speichert diese für eine spätere Auswertung ab.

Ferner ist zu erwähnen, dass die Kühlmittelzuleitung 5 nicht direkt in die Kühlkammer 1 mündet, sondern indirekt über eine Vorkammer 13, um räumliche Temperaturschwankungen innerhalb der Kühlkammer 1 zu vermeiden. Hierzu weist die Vorkammer am Übergang zu der Kühlkammer 1 einen Diffusor 14 auf, der zu einer Verwirbelung des in die Kühlkammer 1 eintretenden Kühlmittels 3 führt. Darüber hinaus ist der Austrittsquerschnitt der Vorkammer 13 am Übergang zu der Kühlkammer 1 wesentlich größer als der Eintrittsquerschnitt am Übergang von der Kühlmittelzuleitung 5 zu der Vorkammer 13, so dass die Kühlmitteleinleitung in die Kühlkammer 1 relativ großflächig erfolgt.

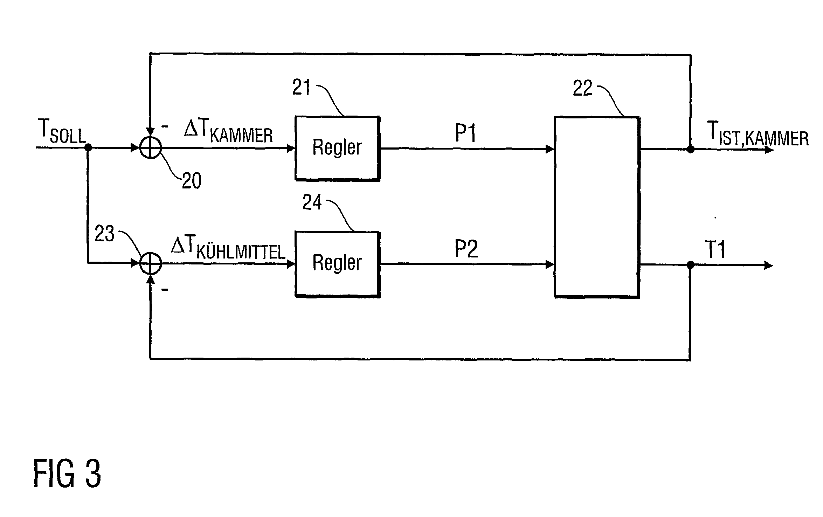

Anhand des regelungstechnischen Ersatzschaltbildes in Figur 3 wird im Folgenden das Temperaturregelverhalten der Regeleinrichtung 11 beschrieben.

So gibt der PC 12 laufend eine Soll-Temperatur T_{SOLL} vor, die von einem Subtrahierer 20 mit einer Ist-Temperatur T_{IST,KAMMER} verglichen wird, wobei die Ist-Temperatur T_{IST,KAMMER} als Mittelwert aus den Temperaturen T2, T3 und T4 berechnet wird.

Der Subtrahierer 20 berechnet aus der Soll-Temperatur T_{SOLL} und der Ist-Temperatur T_{IST,KAMMER} in der Kühlkammer 1 eine Soll-Ist-Abweichung ΔT_{KAMMER} und führt diese einem Regler 21 zu, der die Heizleistung P1 des Verdampfers 4 entsprechend einstellt.

Weiterhin zeigt das regelungstechnische Ersatzschaltbild eine Regelstrecke 22, die auf die Heizleistung P1 des Verdampfers 4 und die Heizleistung P2 der Heizung 6 reagiert, so dass sich die Ist-Temperatur T_{IST,KAMMER} einstellt.

Neben dem vorstehend beschriebenen Regelkreis für den Verdampfer 4 weist die Regeleinrichtung 11 einen weiteren Regelkreis zur Einstellung der Heizleistung P2 der Heizung 6 auf.

So wird die Soll-Temperatur T_{SOLL} für die Temperatur innerhalb der Kühlkammer 1 einem weiteren Subtrahierer 23 zugeführt, der die Soll-Temperatur T_{SOLL} mit der Ist-Temperatur T1 des erwärmten Kühlmittels vergleicht. Der Subtrahierer 23 berechnet daraus eine Soll-Ist-Abweichung ΔT_{KÜHLMITTEL} und führt diese einem weiteren Regler 24 zu, der die Heizleistung P2 der Heizung 6 entsprechend einstellt, worauf die Regelstrecke 22 entsprechend reagiert, so dass sich die Ist-Temperatur T1 einstellt.

Der Regler 24 steuert die Heizleistung P2 der Heizung 6 hierbei so, dass die Ist-Temperatur T1 des der Kühlkammer 1 zugeführten Kühlmittels 3 möglichst der Soll-Temperatur T_{SOLL} innerhalb der Kühlkammer 1 entspricht.

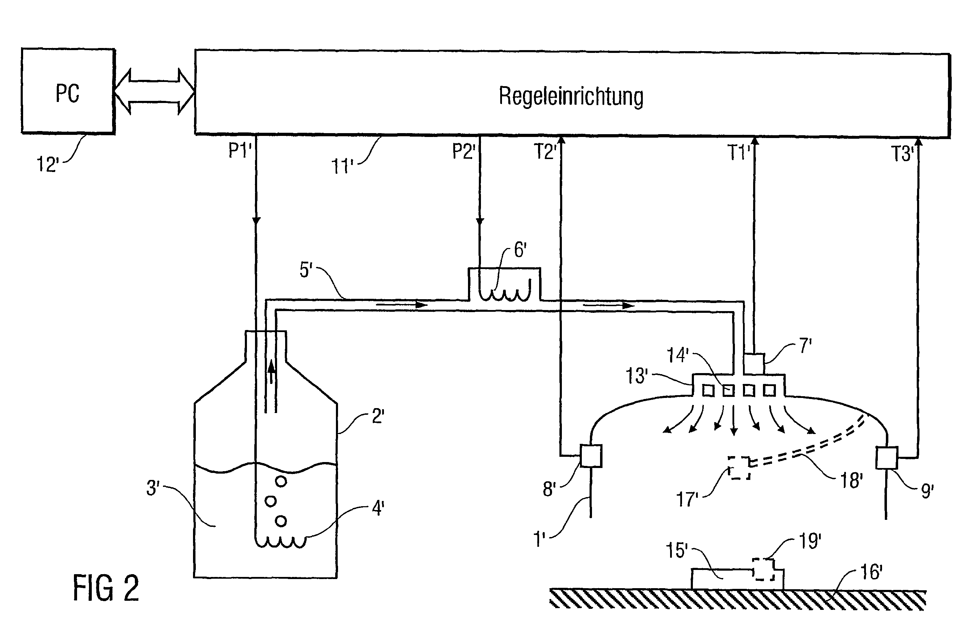

Das in Figur 2 dargestellte Ausführungsbeispiel stimmt weitgehend mit dem vorstehend beschriebenen und in Figur 1 dargestellten Ausführungsbeispiel überein, so dass zur Vermeidung von Wiederholungen auf die vorstehende Beschreibung zu Figur 1 verwiesen wird und im folgenden für entsprechende Bauteile dieselben Bezugszeichen verwendet werden, die lediglich zur Unterscheidung durch einen Apostroph gekennzeichnet sind.

Eine Besonderheit dieses Ausführungsbeispiels besteht darin, dass die Kühlkammer 1' an ihrer Unterseite offen und glockenförmig ausgebildet ist. Die Kühlkammer 1' ist hierbei also mobil und kann so auf eine einzufrierende biologische Probe 15' aufgesetzt werden, wobei die Probe 15' auf einem festen Untergrund 16', wie beispielsweise einem Labortisch, ruht. Die Kühlmittelzuleitung 5' ist deshalb in diesem Ausführungsbeispiel flexibel, um eine flexible Handhabung der Kühlkammer 1' zu ermöglichen.

Ein weiterer Unterschied dieses Ausführungsbeispiels gegenüber dem in Figur 1 gezeigten Ausführungsbeispiel besteht darin, dass die Kühlmittelzuleitung 5' an der Oberseite der Kühlkammer 1' in die Kühlkammer 1' mündet.

Darüber hinaus kann die Kühleinrichtung in diesem Ausführungsbeispiel einen weiteren Temperatursensor 17' aufweisen, der in der Kühlkammer 1' mittels eines Haltearms 18' angebracht ist. Der Haltearm 18' positioniert den Temperatursensor 17' hierbei innerhalb der Kühlkammer 1' an der Stelle, an der sich die Probe 15' befindet, wenn die Kühlkammer 1' auf den Untergrund 16' aufgesetzt ist. Auf diese Weise misst der Temperatursensor 17' sehr genau die lokale Temperatur am Ort der Probe 15', was eine sehr genaue Temperaturregelung ermöglicht.

Weiterhin kann in diesem Ausführungsbeispiel ein Temperatursensor 19' direkt auf der Probe 15' oder einem die Probe 15' tragenden Substrat angeordnet sein, was eine noch genauere Messung der Probentemperatur ermöglicht, da örtliche Temperaturschwankungen innerhalb der Kühlkammer 1' außer Betracht bleiben.

Die Übertragung der von dem Temperatursensor 19' gemessenen Temperatur zu der Regeleinrichtung 11' kann beispielsweise durch herkömmliche elektrische Leitungen erfolgen. Es ist jedoch grundsätzlich auch möglich, die von dem Temperatursensor 19' gemessene Temperatur drahtlos zu der Regeleinrichtung 11' zu übertragen. Durch eine derartige drahtlose Übertragung wird die Mobilität und Portabilität der Kühlkammer 1' nicht beeinträchtigt. Die drahtlose Übertragung der gemessenen Temperatur kann beispielsweise durch einen Transponder erfolgen, der in den Temperatursensor 19' oder einen Probenträger integriert ist. Hinsichtlich der Übertragungsart bestehen hierbei vielfältige Möglichkeiten, die an sich bekannt sind, wie beispielsweise Funkübertragung, Ultraschall-Übertragung, optischen Übertragung, insbesondere Infrarot-Übertragung, etc..

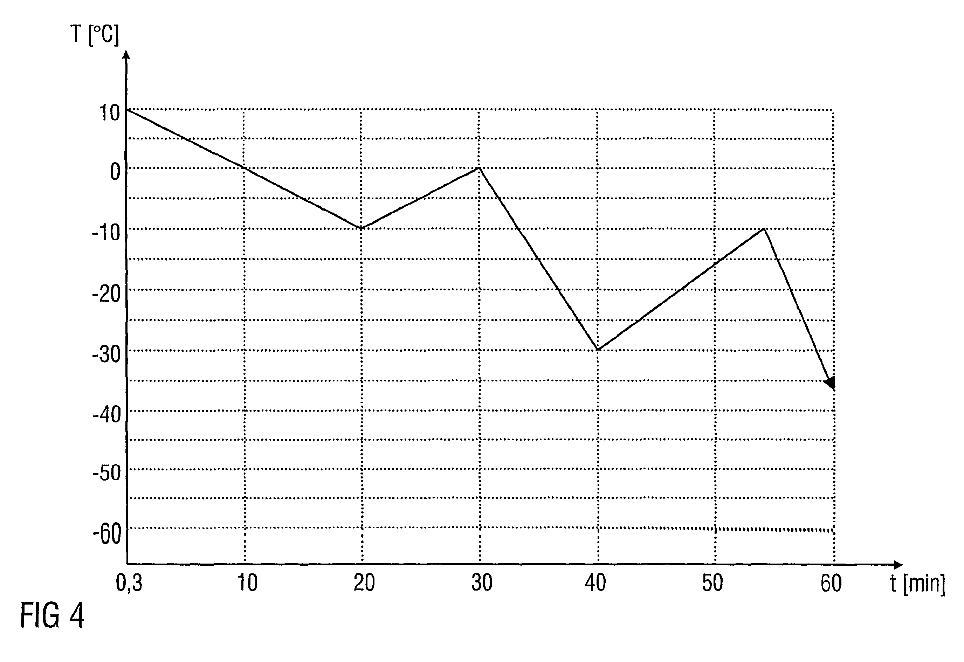

Figur 4 zeigt schließlich einen typischen zeitlichen Temperaturverlauf in der Kühlkammer 1 beim Einfrieren einer biologischen Probe im Rahmen der Kryokonservierung. Daraus ist ersichtlich, dass beim Einfrieren mehrere Kühl- und Aufwärmphasen nacheinander durchfahren werden, um die biologischen Proben möglichst vitalitätserhaltend einzufrieren.

Es sind jedoch im Rahmen der Erfindung beliebige Kühl- und Aufwärmphasen möglich, wobei die Dauer der einzelnen Phasen und die Kühl- bzw. Aufwärmtemperatur beliebig festgelegt werden kann.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste:

- 1, 1': Kühlkammer
- 2, 2': Kühlmittelvorratsbehälter
- 3, 3': Kühlmittel
- 4, 4': Verdampfer
- 5, 5': Kühlmittelzuleitung
- 6, 6': Heizung
- 7, 7': Temperatursensor
- 8, 8': Temperatursensor
- 9, 9': Temperatursensor
- 10, 10': Temperatursensor
- 11, 11': Regeleinrichtung
- 12, 12': PC
- 13, 13': Vorkammer
- 14, 14': Diffusor
- 15': Probe
- 16': Untergrund
- 17': Temperatursensor
- 18': Haltearm
- 19': Temperatursensor
- 20: Subtrahierer
- 21: Regler
- 22: Regelstrecke
- 23: Subtrahierer
- 24: Regler
- P1, P1': Heizleistung des Verdampfers
- P2, P2': Heizleistung der Heizung
- T1, T1': Temperatur des erwärmten Kühlmittels
- T2-T4, T2', T3': Temperatur innerhalb der Kühlkammer

## Patentansprüche

1. Kühleinrichtung, insbesondere zur Kryokonservierung biologischer Proben (15'), mit
a) einem Kühlmittelvorratsbehälter (2, 2'), in dem sich ein Kühlmittel (3, 3') befindet,
b) einer mit dem Kühlmittelvorratsbehälter (2, 2') verbundenen Kühlmittelzuleitung (5, 5') zur Zuführung des Kühlmittels (3, 3') zu einer Kühlkammer (1, 1'),
c) einer Heizung (6, 6') mit einer einstellbaren ersten Heizleistung (P2) zur Erwärmung des der Kühlkammer (1, 1') zugeführten Kühlmittels (3, 3'),
d) einem Verdampfer (4, 4') mit einer einstellbaren zweiten Heizleistung (P1, P1') zur Verdampfung des in dem Kühlmittelvorratsbehälter (2, 2') befindlichen Kühlmittels (3, 3'),
e) einem ersten Temperatursensor (8-10, 8', 9', 17', 19') zur Messung der Temperatur (T2-T4, T2', T3') in der Kühlkammer (1, 1'),
f) einem zweiten Temperatursensor (7, 7') zur Messung der Temperatur (T1, T1') des der Kühlkammer (1, 1') zugeführten Kühlmittels (3, 3'), sowie
g) einem Regler (11, 11') zur Temperaturregelung, der als Regelgrößen mehrere Temperaturen (T1-T4, T1'-T3') erfasst, wobei der Regler (11, 11') eingangsseitig mit dem ersten Temperatursensor (8-10, 8', 9', 17', 19') und dem zweiten Temperatursensor (7, 7') verbunden ist,
**dadurch gekennzeichnet, dass**
h) der Regler (11, 11') ein Mehrfachregler ist, der als Stellgrößen mehrere Heizleistungen (P1, P1', P2, P2') einstellt, wobei der Mehrfachregler (11, 11') ausgangsseitig mit der Heizung (6, 6') und dem Verdampfer (4, 4') verbunden ist.

2. Kühleinrichtung nach Anspruch 1, **dadurch gekennzeichnet, dass** zur Messung der Temperatur in der Kühlkammer (1, 1') mehrere mit dem Mehrfachregler (11) verbundene Temperatursensoren (8-10, 8', 9', 17', 19') vorgesehen sind.

3. Kühleinrichtung nach Anspruch 2, **dadurch gekennzeichnet, dass** die Temperatursensoren (8-10, 8', 9', 17', 19') zur Messung der räumlichen Temperaturverteilung räumlich verteilt angeordnet sind.

4. Kühleinrichtung nach Anspruch 2 oder 3, **dadurch gekennzeichnet, dass** mindestens einer der Temperatursensoren (8-10, 8', 9', 17', 19') ein Thermoelement und mindestens einer der Temperatursensoren (8-10, 8', 9', 17', 19') ein temperaturabhängiger elektrischer Widerstand ist.

5. Kühleinrichtung nach einem der vorhergehenden Ansprüche, **dadurch gekennzeichnet, dass** die Heizung (6, 6') in die Kühlmittelzuleitung (5, 5') integriert ist.

6. Kühleinrichtung nach einem der vorhergehenden Ansprüche, **dadurch gekennzeichnet, dass** das Kühlmittel (3, 3') Stickstoff ist.

7. Kühleinrichtung nach einem der vorhergehenden Ansprüche, **dadurch gekennzeichnet, dass** der erste Temperatursensor (8-10, 8', 9', 17', 19') und/oder der zweite Temperatursensor (7, 7') mit einer Speichereinrichtung (12, 12') verbunden ist, welche die Temperaturverläufe speichert.

8. Kühleinrichtung nach einem der vorhergehenden Ansprüche, **dadurch gekennzeichnet, dass** die Kühlmittelzuleitung (5, 5') über einen Diffusor (14, 14') in die Kühlkammer (1, 1') mündet.

9. Kühleinrichtung nach einem der vorhergehenden Ansprüche, **dadurch gekennzeichnet, dass** die Kühlmittelzuleitung (5) seitlich in die Kühlkammer (1) mündet.

10. Kühleinrichtung nach Anspruch 9, **dadurch gekennzeichnet, dass** die Kühlmittelzuleitung (5) nur an einer Seite der Kühlkammer (1) in die Kühlkammer (1) mündet.

11. Kühleinrichtung nach einem der vorhergehenden Ansprüche, **dadurch gekennzeichnet, dass** die Kühlmittelzuleitung (5') an der Oberseite der Kühlkammer (1') in die Kühlkammer (1') mündet.

12. Kühleinrichtung nach einem der vorhergehenden Ansprüche, **dadurch gekennzeichnet, dass** die Kühlkammer (1) geschlossen ist.

13. Kühleinrichtung nach einem der vorhergehenden Ansprüche, **dadurch gekennzeichnet, dass** die Kühlkammer (1') an ihrer Unterseite offen ist.

14. Kühleinrichtung nach einem der vorhergehenden Ansprüche, **dadurch gekennzeichnet, dass** die Kühlkammer (1') portabel ist.

15. Kühleinrichtung nach einem der vorhergehenden Ansprüche, **dadurch gekennzeichnet, dass** der erste Temperatursensor (17') innerhalb der Kühlkammer (1') und zu deren Wandung beabstandet angeordnet ist.

16. Kühleinrichtung nach Anspruch 15, **dadurch gekennzeichnet, dass** der erste Temperatursensor (17') durch eine in die Kühlkammer (1') hineinragende Halteeinrichtung (18') an der Kühlkammer (1') befestigt ist.

17. Kühleinrichtung nach Anspruch 15, **dadurch gekennzeichnet, dass** der erste Temperatursensor (19') an der Probe (15') oder an einem Probenhalter angebracht ist.

18. Kühleinrichtung nach einem der vorhergehenden Ansprüche, **dadurch gekennzeichnet, dass** der erste Temperatursensor (19') mit einem Transponder verbunden ist, der die gemessene Temperatur drahtlos an die Regeleinrichtung (11') überträgt.

19. Kühleinrichtung nach Anspruch 18, **dadurch gekennzeichnet, dass** der Transponder ein Funk-Transponder, ein Ultraschall-Transponder, ein optischer Transponder oder ein Infrarot-Transponder ist.

20. Betriebsverfahren für eine Kühleinrichtung, insbesondere zur Kryokonservierung biologischer Proben (15'), mit den folgenden Schritten:
a) Verdampfung eines flüssigen Kühlmittels (3, 3') in einem Kühlmittelvorratsbehälter (2, 2') mit einer einstellbaren zweiten Heizleistung (P1, P1'),
b) Erwärmung des verdampften Kühlmittels (3, 3') vor der Einleitung in eine Kühlkammer (1, 1') mit einer einstellbaren ersten Heizleistung (P2, P2'),
c) Einleitung des Kühlmittels (3, 3') in eine Kühlkammer (1, 1') zur Kühlung von Kühlgut,
d) Messung der Temperatur (T1, T1') des erwärmten Kühlmittels (3, 3'),
e) Messung der Temperatur (T2-T4, T2', T3') in der Kühlkammer (1, 1'),
f) Regelung der Temperatur, indem beide Temperaturen (T1-T4, T1', T2', T3') als Regelgrößen erfasst werden,
**dadurch gekennzeichnet, dass**
g) eine Mehrfachregelung der ersten Heizleistung (P2) und der zweiten Heizleistung (P1, P1') erfolgt, indem zusätzlich zu der ersten Heizleistung (P2, P2') die zweite Heizleistung als weitere Stellgröße (P1, P1') eingestellt wird.

21. Betriebsverfahren nach Anspruch 20, **gekennzeichnet durch** folgende Schritte:
- Messung mehrerer räumlich verteilter Temperaturen (T2-T4, T2', T3') innerhalb der Kühlkammer (1, 1'),
- Mehrfachregelung der ersten Heizleistung (P2, P2') und/oder der zweiten Heizleistung (P1, P1') in Abhängigkeit von den verschiedenen Temperaturen (T2-T4, T2', T3') innerhalb der Kühlkammer (1, 1').

22. Betriebsverfahren nach einem der Ansprüche 20 bis 21, **gekennzeichnet durch** folgende Schritte:
- Messung der Temperatur (T2-T4, T2', T3') in der Kühlkammer (1, 1') und/oder der Temperatur (T1, T1') des Kühlmittels (3, 3') vor der Einleitung in die Kühlkammer (1, 1') mit einem Thermoelement,
- Messung der Temperatur (T2-T4, T2', T3') in der Kühlkammer (1, 1') und/oder der Temperatur (T1, T1') des Kühlmittels (3, 3') vor der Einleitung in die Kühlkammer (1, 1') mit einem temperaturabhängigen Widerstand,
- Mehrfachregelung der ersten Heizleistung (P2, P2') und/oder der zweiten Heizleistung (P1, P1') in Abhängigkeit von der von dem Thermoelement gemessenen Temperatur und der von dem temperaturabhängigen Widerstand gemessenen Temperatur.

23. Betriebsverfahren nach einem der Ansprüche 20 bis 22, **gekennzeichnet durch** folgende Schritte:
- Vorgabe eines Sollwerts (T_{SOLL}) für die Temperatur in der Kühlkammer (1, 1'),
- Regelung der Temperatur (T1, T1') des in die Kühlkammer (1, 1') eintretenden Kühlmittels (3, 3') entsprechend dem für die Kühlkammer (1, 1') vorgegebenen Sollwert (T_{SOLL}) **durch** eine Einstellung der ersten Heizleistung (P2, P2').

24. Betriebsverfahren nach Anspruch 23, **dadurch gekennzeichnet, dass** die Temperatur (T1, T1') des in die Kühlkammer (1, 1') eintretenden Kühlmittels (3, 3') auf den Sollwert (T_{SOLL}) für die Temperatur in der Kühlkammer (1, 1') geregelt wird.

25. Verwendung einer Kühleinrichtung nach einem der Ansprüche 1 bis 19 zur Kryokonservierung biologischer Proben (15').

## Claims

1. Cooling apparatus, in particular for cryopreservation of biological samples (15') comprising:
a) a cooling agent storage container (2, 2'), in which a cooling agent (3, 3') is disposed,
b) a cooling agent supply line (5, 5'), connected to the cooling agent storage container (2, 2'), for supplying the cooling agent (3, 3') to a cooling chamber (1, 1'),
c) a heater (6, 6'), with an adjustable first heating capacity (P2), for heating the cooling agent (3, 3') supplied to the cooling chamber; (1, 1'),
d) an evaporator (4, 4') with an adjustable second heating capacity (P1, P1') for evaporating the cooling agent (3, 3') disposed in the cooling agent storage container (2, 2'),
e) a first temperature sensor (8-10, 8', 9', 17', 19') for measuring the temperature (T2-T4, T2', T3') in the cooling chamber (1, 1'),
f) a second temperature sensor (7, 7') for measuring the temperature (T1, T1') of the cooling agent (3, 3') supplied to the cooling chamber (1, 1'), and
g) a controller (11, 11') for temperature control, which controller detects a plurality of temperatures (T1-T4, T1'-T3') as control variables, the controller (11, 11') being connected to the first temperature sensor (8-10, 8', 9', 17', 19') and to the second temperature sensor (7, 7') on the input side,
**characterised in that**
h) the controller (11, 11') is a multiple controller, which adjusts a plurality of heating capacities (P1, P1', P2, P2') as manipulated variables, the multiple controller (11, 11') being connected to the heater (6, 6') and to the evaporator (4, 4') on the output side.

2. Cooling apparatus according to claim 1, **characterised in that** a plurality of temperature sensors (8-10, 8', 9', 17', 19') connected to the multiple controller (11) are provided for measuring the temperature in the cooling chamber (1, 1').

3. Cooling apparatus according to claim 2, **characterised in that** the temperature sensors (8-10, 8', 9', 17', 19') are arranged in a spatially distributed manner for measuring the spatial distribution of temperature.

4. Cooling apparatus according to either claim 2 or claim 3, **characterised in that** at least one of the temperature sensors (8-10, 8', 9', 17', 19') is a thermocouple and at least one of the temperature sensors (8-10, 8', 9', 17', 19') is a temperature-dependent electrical resistor.

5. Cooling apparatus according to any one of the preceding claims, **characterised in that** the heater (6, 6') is integrated in the cooling agent supply line (5, 5').

6. Cooling apparatus according to any one of the preceding claims, **characterised in that** the cooling agent (3, 3') is nitrogen.

7. Cooling apparatus according to any one of the preceding claims, **characterised in that** the first temperature sensor (8-10, 8', 9', 17', 19') and/or the second temperature sensor (7, 7') is connected to storage equipment (12, 12') which stores the temperature gradients.

8. Cooling apparatus according to any one of the preceding claims, **characterised in that** the cooling agent supply line (5, 5') empties via a diffuser (14, 14') into the cooling chamber (1, 1').

9. Cooling apparatus according to any one of the preceding claims, **characterised in that** the cooling agent supply line (5) empties laterally into the cooling chamber (1).

10. Cooling apparatus according to claim 9, **characterised in that** the cooling agent supply line (5) empties into the cooling chamber (1) only on one side of the cooling chamber (1).

11. Cooling apparatus according to any one of the preceding claims, **characterised in that** the cooling agent supply line (5') empties into the cooling chamber (1') at the top of the cooling chamber (1').

12. Cooling apparatus according to any one of the preceding claims, **characterised in that** the cooling chamber (1) is closed.

13. Cooling apparatus according to any one of the preceding claims, **characterised in that** the cooling chamber (1') is open at its lower face.

14. Cooling apparatus according to any one of the preceding claims, **characterised in that** the cooling chamber (1') is portable.

15. Cooling apparatus according to any one of the preceding claims, **characterised in that** the first temperature sensor (17') is arranged inside the cooling chamber (1') and at a distance from the wall of said chamber.

16. Cooling apparatus according to claim 15, **characterised in that** the first temperature sensor (17') is fastened to the cooling chamber (1') by a holding apparatus (18') projecting into the cooling chamber (1').

17. Cooling apparatus according to claim 15, **characterised in that** the first temperature sensor (19') is attached to the sample (15') or to a sample holder.

18. Cooling apparatus according to any one of the preceding claims, **characterised in that** the first temperature sensor (19') is connected to a transponder, which wirelessly transmits the measured temperature to the control device (11').

19. Cooling apparatus according to claim 18, **characterised in that** the transponder is a radio transponder, an ultrasonic transponder, an optical transponder or an infrared transponder.

20. Operating method for a cooling apparatus, in particular for cryopreservation of biological samples (15'), said method comprising the following steps:
a) evaporation of a liquid cooling agent (3, 3') in a cooling agent storing container (2, 2') with an adjustable second heating capacity (P1, P2'),
b) heating of the evaporated cooling agent (3, 3'), prior to introduction into a cooling chamber (1, 1') with an adjustable first heating capacity (P2, P2'),
c) introduction of the cooling agent (3, 3') into a cooling chamber (1, 1') for cooling material to be cooled,
d) measurement of the temperature (T1, T1') of the heated cooling agent (3, 3'),
e) measurement of the temperature (T2-4, T2', T3') in the cooling chamber (1, 1'), and
f) controlling of the temperature, in that both temperatures (T1-T4, T1', T2', T3') are detected as control variables,
**characterised in that**
g) a multiple controlling of the first heating capacity (P2) and the second heating capacity (P1, P1') takes place, **in that** the second heating capacity, in addition to the first heating capacity (P2, P2'), is adjusted as another manipulated variable (P1, P1').

21. Operating method according to claim 20, **characterised by** the following steps:
- measurement of a plurality of spatially distributed temperatures (T2-T4, T2', T3') inside the cooling chamber (1, 1'),
- multiple controlling of the first heating capacity (P2, P2') and/or of the second heating capacity (P1, P1') as a function of the different temperatures (T2-T4, T2', T3') inside the cooling chamber (1, 1').

22. Operating method according to either claim 20 or claim 21, **characterised by** the following steps:
- measurement, with a thermocouple, of the temperature (T2-T4, T2', T3') in the cooling chamber (1, 1') and/or of the temperature (T1, T1') of the cooling agent (3, 3') prior to introduction into the cooling chamber (1, 1'),
- measurement, with a temperature-dependent resistor, of the temperature (T2-T4, T2', T3') in the cooling chamber (1, 1') and/or of the temperature (T1, T1') of the cooling agent (3, 3') prior to introduction into the cooling chamber (1, 1'),
- multiple controlling of the first heating capacity (P2, P2') and/or of the second heating capacity (P1, P1') as a function of the temperature measured by the thermocouple and of the temperature measured by the temperature-dependent resistor.

23. Operating method according to any one of claims 20 to 22, **characterised by** the following steps:
- setting of a target value (T_{SOLL}) for the temperature in the cooling chamber (1, 1'),
- controlling of the temperature (T1, T1') of the cooling agent (3, 3') entering the cooling chamber (1, 1') in accordance with the target value (T_{SOLL}) set for the cooling chamber (1, 1'), by adjusting the first heating capacity (P2, P2').

24. Operating method according to claim 23, **characterised in that** the temperature (T1, T1') of the cooling agent (3, 3') entering the cooling chamber (1, 1') is controlled to the target value (T_{SOLL}) for the temperature in the cooling chamber (1, 1').

25. Use of a cooling apparatus according to any one of claims 1 to 19 for the cryopreservation of biological samples (15').

## Revendications

1. Dispositif de refroidissement, en particulier pour la cryoconservation d'échantillons biologiques (15') comportant
a) un réservoir de produit réfrigérant (2, 2') dans lequel se trouve un produit réfrigérant (3, 3'),
b) une amenée de produit réfrigérant (5, 5') reliée au réservoir de produit réfrigérant (2, 2') permettant d'amener le produit réfrigérant (3, 3') à une chambre froide (1, 1'),
c) un système de chauffage (6, 6') avec une première puissance calorifique (P2) réglable permettant de chauffer le produit réfrigérant (3, 3') amené à la chambre froide (1, 1') ;
d) un évaporateur (4, 4') avec une deuxième puissance calorifique (P1, P1') réglable permettant l'évaporation du produit réfrigérant (3, 3') se trouvant dans le réservoir de produit réfrigérant (2, 2'),
e) un premier capteur de température (8-10, 8', 9', 17', 19') permettant de mesurer la température (T2-T4, T2', T3') dans la chambre froide (1, 1'),
f) un deuxième capteur de température (7, 7') permettant de mesurer la température (T1, T1') du produit réfrigérant (3, 3') amené à la chambre froide (1, 1'), ainsi que
g) un régulateur (11, 11') permettant de réguler la température, qui saisit plusieurs températures (T1-T4, T1'-T3') comme grandeurs de réglage, le régulateur (11, 11') étant relié côté entrée au premier capteur de température (8-10, 8', 9', 17', 19') et deuxième capteur de température (7, 7'),
**caractérisé en ce que**
h) le régulateur (11, 11') est un régulateur multiple, qui règle plusieurs puissances calorifiques (P1, P1', P2, P2') comme grandeurs de réglage, le régulateur multiple (11, 11') étant relié côté sortie au système de chauffage (6, 6') et à l'évaporateur (4, 4').

2. Dispositif de refroidissement selon la revendication 1, **caractérisé en ce que** pour mesurer la température dans la chambre froide (1, 1'), plusieurs capteurs de température (8-10, 8', 9', 17', 19') reliés au régulateur multiple (11) sont prévus.

3. Dispositif de refroidissement selon la revendication 2, **caractérisé en ce que** les capteurs de température (8-10, 8', 9', 17', 19') sont distribués dans l'espace pour mesurer la distribution spatiale des températures.

4. Dispositif de refroidissement selon la revendication 2 ou 3, **caractérisé en ce qu'**au moins un des capteurs de température (8-10, 8', 9', 17', 19') est un thermocouple et au moins un des capteurs de température (8-10, 8', 9', 17', 19') est une résistance électrique variable avec la température.

5. Dispositif de refroidissement selon l'une quelconque des revendications précédentes, **caractérisé en ce que** le système de chauffage (6, 6') est intégré dans l'amenée de produit réfrigérant (5, 5').

6. Dispositif de refroidissement selon l'une quelconque des revendications précédentes, **caractérisé en ce que** le produit réfrigérant (3, 3') est de l'azote.

7. Dispositif de refroidissement selon l'une quelconque des revendications précédentes, **caractérisé en ce que** le premier capteur de température (8-10, 8', 9', 17', 19') et/ou le deuxième capteur de température (7, 7') est relié à une mémoire (12, 12') qui enregistre les courbes de température.

8. Dispositif de refroidissement selon l'une quelconque des revendications précédentes, **caractérisé en ce que** l'amenée de produit réfrigérant (5, 5') débouche dans la chambre froide (1, 1') via un diffuseur (14, 14').

9. Dispositif de refroidissement selon l'une quelconque des revendications précédentes, **caractérisé en ce que** l'amenée de produit réfrigérant (5) débouche sur le côté dans la chambre froide (1).

10. Dispositif de refroidissement selon la revendication 9, **caractérisé en ce que** l'amenée de produit réfrigérant (5) ne débouche que d'un côté de la chambre froide (1) dans la chambre froide (1).

11. Dispositif de refroidissement selon l'une quelconque des revendications précédentes, **caractérisé en ce que** l'amenée de produit réfrigérant (5') débouche au niveau de la face supérieure de la chambre froide (1') dans la chambre froide (1').

12. Dispositif de refroidissement selon l'une quelconque des revendications précédentes, **caractérisé en ce que** la chambre froide (1) est fermée.

13. Dispositif de refroidissement selon l'une quelconque des revendications précédentes, **caractérisé en ce que** la chambre froide (1') est ouverte au niveau de sa face inférieure.

14. Dispositif de refroidissement selon l'une quelconque des revendications précédentes, **caractérisé en ce que** la chambre froide (1') est portable.

15. Dispositif de refroidissement selon l'une quelconque des revendications précédentes, **caractérisé en ce que** le premier capteur de température (17') est disposé à l'intérieur de la chambre froide (1') et espacé des parois.

16. Dispositif de refroidissement selon la revendication 15, **caractérisé en ce que** le premier capteur de température (17') est fixé au niveau de la chambre froide (1') par un dispositif de retenue (18') faisant saillie dans la chambre froide (1').

17. Dispositif de refroidissement selon la revendication 15, **caractérisé en ce que** le premier capteur de température (19') est fixé au niveau de l'échantillon (15') ou au niveau d'un porte-échantillon.

18. Dispositif de refroidissement selon l'une quelconque des revendications précédentes, **caractérisé en ce que** le premier capteur de température (19') est relié à un transpondeur, qui transmet la température mesurée sans fil au système de régulation (11').

19. Dispositif de refroidissement selon la revendication 18, **caractérisé en ce que** le transpondeur est un transpondeur radio, un transpondeur ultrasons, un transpondeur optique ou un transpondeur infrarouge.

20. Procédé d'exploitation pour un dispositif de refroidissement, en particulier pour la cryoconservation d'échantillons biologiques (15'), comprenant les étapes suivantes :
a) évaporation d'un produit réfrigérant (3, 3') liquide dans un réservoir de produit réfrigérant (2, 2') avec une deuxième puissance calorifique (P1, P1') réglable,
b) réchauffement du produit réfrigérant (3, 3') évaporé avant l'introduction dans une chambre froide (1, 1') avec une première puissance calorifique (P2, P2') réglable,
c) introduction du produit réfrigérant (3, 3') dans une chambre froide (1, 1') pour refroidir le produit à réfrigérer,
d) mesure de la température (T1, T1') du produit réfrigérant (3, 3') chauffé,
e) mesure de la température (T2-T4, T2', T3') dans la chambre froide (1, 1'),
f) régulation de la température, par la saisie des deux températures (T1, T4, T1', T2', T3') comme grandeurs de réglage,
**caractérisé en ce que**
g) une régulation multiple de la première puissance calorifique (P2) et de la deuxième puissance calorifique (P1, P1') se fait par le réglage de la deuxième puissance calorifique, en plus de la première puissance calorifique (P2, P2'), comme une autre grandeur de réglage (P1, P1').

21. Procédé d'exploitation selon la revendication 20, **caractérisé par** les étapes suivantes :
- mesure de plusieurs températures distribuées dans l'espace (T2-T4, T2', T3') à l'intérieur de la chambre froide (1, 1').
- réglage multiple de la première puissance calorifique (P2, P2') et/ou de la deuxième puissance calorifique (P1, P1') en fonction des différentes températures (T2-T4, T2', T3) à l'intérieur de la chambre froide (1, 1').

22. Procédé d'exploitation selon l'une quelconque des revendications 20 à 21, **caractérisé par** les étapes suivantes :
- mesure de la température (T2-T4, T2', T3) dans la chambre froide (1, 1') et/ou de la température (T1, T1') du produit réfrigérant (3, 3') avant l'introduction dans la chambre froide (1, 1') avec un thermocouple,
- mesure de la température (T2-T4, T2', T3') dans la chambre froide (1, 1') et/ou de la température (T1, T1') du produit réfrigérant (3, 3') avant l'introduction dans la chambre froide (1, 1') avec une résistance variable avec la température,
- régulation multiple de la première puissance calorifique (P2, P2') et/ou de la deuxième puissance calorifique (P1, P1') en fonction de la température mesurée par le thermocouple et de la température mesurée par la résistance variable avec la température.

23. Procédé d'exploitation selon l'une quelconque des revendications 20 à 22, **caractérisé par** les étapes suivantes :
- prédéfinition d'une valeur de consigne (T_{CONS}) pour la température dans la chambre froide (1, 1'),
- régulation de la température (T1, T1') du produit réfrigérant (3, 3') entrant dans la chambre froide (1, 1') en fonction de la valeur de consigne (T_{CONS}) prédéfinie pour la chambre froide (1, 1') par un réglage de la première puissance calorifique (P2, P2').

24. Procédé d'exploitation selon la revendication 23, **caractérisé en ce que** la température (T1, T1') du produit réfrigérant (3, 3') entrant dans la chambre froide (1, 1') est régulée sur la valeur de consigne (T_{CONS}) pour la température dans la chambre froide (1, 1').

25. Utilisation d'un dispositif de refroidissement selon l'une quelconque des revendications 1 à 19 pour la cryoconservation d'échantillons biologiques (15').
